# EUROPÄISCHE PATENTANMELDUNG

(11) **EP 1 103 888 A1**
(43) Veröffentlichungstag der Anmeldung: **30.05.2001**
(21) Anmeldenummer: 00250388.6
(22) Anmeldetag: 17.11.2000
(51) Int. Cl.: G06F 3/14, G06F 17/21

(54) **Verfahren zur Informationsuebermittlung und -darstellung zu bzw. auf einer drahtlos betriebenen Kommunikationseinrichtung**

(30) Priorität: 26.11.1999 DE 19958942
(71) Anmelder: SIEMENS AKTIENGESELLSCHAFT, 80333 München (DE)
(72) Erfinder: Vogel, Arnim, 10437 Berlin (DE)

(57) **Zusammenfassung**

Die Erfindung betrifft ein Verfahren zur Informationsübermittlung und -darstellung zu bzw. auf einer drahtlos betreibbaren Kommunikationseinrichtung (3) mit einer Anzeigeeinheit (4), bei dem mehrere jeweils für sich auf der Anzeigeeinheit (4) darstellbare Nachrichten (N1,N2,N3,...,Nn) als zusammenhängende Gesamtnachricht (2) zu der Kommunikationseinrichtung (3) übertragen werden.

Um sich bewegende Abläufe auf der Anzeigeeinheit (4) der Kommunikationseinrichtung (3) darzustellen, enthalten die Nachrichten (N1,N2,N3,...,Nn) jeweils mindestens ein Bild (B1,B2,B3,...,Bn) einer Bildfolge und werden in einer derartigen zeitlichen Abfolge angezeigt, daß der Eindruck von sich bewegenden Bildern vermittelt wird. Das Verfahren kann unter Anwendung des Kommunikationsprotokolls WAP und der Seitenbeschreibungssprache WML realisiert werden.

## Beschreibung

Die Erfindung betrifft ein Verfahren zur Informationsübermittlung und -darstellung zu bzw. auf einer drahtlos betreibbaren Kommunikationseinrichtung mit einer Anzeigeeinheit, bei dem mehrere jeweils für sich auf der Anzeigeeinheit darstellbare Nachrichten als zusammenhängende Gesamtnachricht zu der Kommunikationseinrichtung übertragen werden und die Nachrichten jeweils für sich auf der Anzeigeeinheit angezeigt werden.

Ein derartiges Verfahren zur Informationsübermittlung und - darstellung ist aus der Druckschrift WML Language Reference der Firma Phone.com, Inc., 800 Chesapeake Drive, Redwood City, CA 94063, Part Number DKWL-R32-001, Version 1.1, July 1999, insbesondere aus den Seiten 11 und 23 bekannt.

In dieser Druckschrift werden die jeweils für sich auf der Anzeigeeinheit darstellbaren Nachrichten "cards" und die zusammenhängende Gesamtnachricht "deck" genannt. Mit diesem bekannten Verfahren werden Informationen zu der drahtlos betreibbaren Kommunikationseinrichtung (z. B. zu einem Mobiltelefon oder einem Personal Digital Assistent (PDA) genannten Kommunikationsgerät) übertragen und diese Informationen auf der Anzeigeeinheit dieser Kommunikationseinrichtung dargestellt. Diese Informationen können beispielsweise Texte sein, welche der Benutzer der Kommunikationseinrichtung auf der Anzeigeeinheit lesen kann. Die Übertragung von Daten zu der Kommunikationseinrichtung dauert relativ lange, weil die Datenübertragungsrate von drahtlosen Übertragungsmethoden im allgemeinen relativ gering ist. Daher werden mehrere Nachrichten, die jeweils für sich auf der Anzeigeeinheit der Kommunikationseinrichtung dargestellt werden sollen, als eine zusammenhängende Gesamtnachricht gemeinsam zu der Kommunikationseinrichtung übertragen. Dabei handelt es sich z. B. um solche Nachrichten, von denen erwartet wird, daß der Benutzer der Kommunikationseinrichtung sie in der nächsten Zeit auf der Anzeigeeinheit darstellen möchte. Dies trifft z. B. für Textseiten zu, bei denen der Benutzer von einer ersten Textseite zu einer zweiten Textseite gelangen kann (vgl. oben genannte Druckschrift Seite 25). Dabei wird gemeinsam mit einer ersten Nachricht, welche die erste Textseite enthält, eine zweite Nachricht, welche die zweite Textseite enthält, als zusammenhängende Gesamtnachricht zu der Kommunikationseinrichtung übermittelt. Wenn der Benutzer von der ersten Textseite zu der zweiten Textseite gelangen möchte, so muß diese zweite Textseite nicht einzeln über die relativ langsame drahtlose Übertragungsmethode zu der Kommunikationseinrichtung übermittelt werden, sondern liegt schon in der Kommunikationseinrichtung vor, so daß diese zweite Textseite ohne zeitliche Verzögerung auf der Anzeigeeinheit der Kommunikationseinrichtung angezeigt werden kann. Bei dem bekannten Verfahren lassen sich als Nachrichten jeweils unbewegte (statische) Inhalte, z.B. Texte oder unbewegte Bilder, für die Darstellung auf der Anzeigeeinheit übertragen.

Der Erfindung liegt die Aufgabe zugrunde, ein Verfahren zur Übermittlung von Informationen zu einer drahtlos betreibbaren Kommunikationseinrichtung und zur Darstellung dieser Informationen auf der Anzeigeeinheit dieser Kommunikationseinrichtung anzugeben, mit dem sich der Darstellungsumfang erweitern läßt.

Diese Aufgabe wird bei einem Verfahren der eingangs angegebenen Art erfindungsgemäß dadurch gelöst, daß die Nachrichten jeweils mindestens ein Bild einer Bildfolge enthalten und die Nachrichten mit jeweils einem Bild der Bildfolge in einer derartigen zeitlichen Abfolge angezeigt werden, daß der Eindruck von sich bewegenden Bildern vermittelt wird.

Ein besonderer Vorteil der Erfindung liegt darin, daß das eingangs beschriebene bekannte Verfahren der Übertragung von mehreren darstellbaren Nachrichten als eine zusammenhängende Gesamtnachricht in einer neuartigen Art und Weise dazu genutzt wird, mit Nachrichten Einzelbilder einer Bildfolge zu übertragen, welche zur Darstellung von sich bewegenden Bildern geeignet sind und diese Nachrichten in einer solchen zeitlichen Abfolge anzuzeigen, daß der Eindruck von sich bewegenden Bildern entsteht. Dazu bedarf es lediglich einer Erweiterung des bekannten Verfahrens, was schnell und kostengünstig realisierbar ist.

Bei dem erfindungsgemäßen Verfahren kann die zeitliche Abfolge der Nachrichten eingriffsabhängig unterbrochen werden. Dadurch kann z. B. ein Nutzer der Kommunikationseinrichtung durch einen Eingriff von außen, z. B. einen Tastendruck, die zeitliche Abfolge und damit die sich bewegenden Bilder unterbrechen und damit z.B. eine Anzeige eines unbewegten Bildes oder eine Anzeige einer neuen Textseite auf der Anzeigeeinheit der Kommunikationseinrichtung hervorrufen.

Des weiteren kann zur Übertragung der jeweils mindestens ein Bild einer Bildfolge enthaltenden Nachrichten ein Wireless Application Protocol (WAP) genanntes Kommunikationsprotokoll verwendet werden. Dieses Kommunikationsprotokoll wird zur drahtlosen Informationsübermittlung benutzt und wird beispielsweise in der Schrift "Wireless Application Protocol Architecture Specification" beschrieben, welche von der Organisation Wireless Application Protocol Forum Ltd. ( kurz auch als Wapforum bezeichnet; Internetadresse www.wapforum.org) zusammen mit anderen technischen Spezifikationen z.B. über eine Internetseite "WAP Forum Specifications" mit der Internetadresse www.wapforum.org/what/technical.htm zu beziehen ist.

In einer besonderen Ausgestaltungsform des erfindungsgemäßen Verfahrens kann eine Wireless Markup Language (WML) genannte Seitenbeschreibungssprache benutzt werden. Diese Seitenbeschreibungssprache dient dazu, im Rahmen des Kommunikationsprotokolls WAP Informationen zur Darstellung auf der Anzeigeeinheit der Kommunikationseinrichtung zu übertragen und wird beispielsweise in der o.g. Druckschrift "WML Language Reference" und in der Schrift " Wireless Markup Language Specification" beschrieben; die letztgenannte Schrift kann beispielsweise über die oben erwähnte Internetseite der Organisation Wapforum bezogen werden.

Bei Benutzung der Seitenbeschreibungssprache WML kann als Gesamtnachricht ein Objekt des Typs "deck" der Seitenbeschreibungssprache WML übertragen werden. Ebenso können die Nachrichten als Objekte des Typs "card" der Seitenbeschreibungssprache WML übertragen werden. Dies hat insbesondere den Vorteil, daß Objekte des Typs "card" auf bereits existierenden Kommunikationseinrichtungen dargestellt werden können, die die Seitenbeschreibungssprache WML nutzen. Damit kann das erfindungsgemäße Verfahren sofort auf bereits existierenden Geräten ohne Änderung derselben angewandt werden.

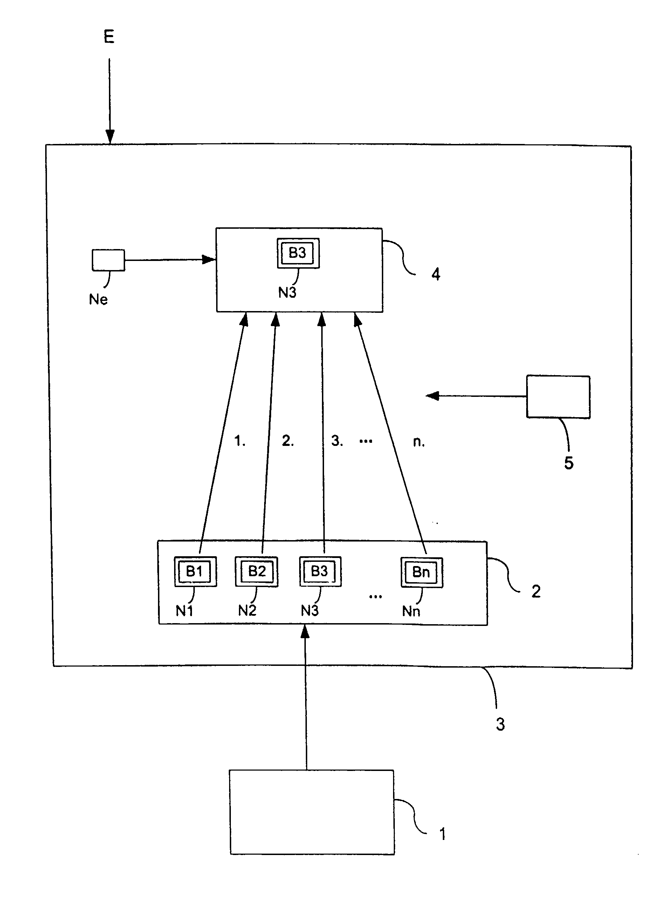

Die weitere Erläuterung des erfindungsgemäßen Verfahrens erfolgt anhand eines in der Figur dargestellten Ausführungsbeispiels einer drahtlos betreibbaren Kommunikationseinrichtung.

Von einer Informationsquelle 1 wird eine Gesamtnachricht 2, welche Nachrichten N1, N2, N3 usw. bis Nn enthält, zu einer drahtlos betreibbaren Kommunikationseinrichtung 3 übermittelt und in dieser gespeichert. Dabei enthält die Nachricht N1 mindestens ein Bild B1 einer Bildfolge, die Nachricht N2 mindestens ein nachfolgendes Bild B2 derselben Bildfolge usw.; die Nachricht Nn enthält mindestens ein Bild Bn derselben Bildfolge. In der Kommunikationseinrichtung 3 werden die Nachrichten N1, N2, N3 bis Nn nacheinander in einer Anzeigeeinheit 4 derart angezeigt, so daß der Eindruck von sich bewegenden Bildern vermittelt wird. Dies wird durch eine Zeitgebereinheit 5 erreicht, die die zeitliche Abfolge der Anzeige der Nachrichten N1 bis Nn bzw. der Bilder B1 bis Bn entsprechend steuert. Durch einen Eingriff E, der, z. B. von einem Benutzer der Kommunikationseinrichtung 3, von außen in das in der Kommunikationseinrichtung 3 ablaufende Verfahren durchgeführt wird, kann die zeitliche Abfolge der Nachrichten unterbrochen werden und z. B. eine zu diesem Zweck in der Kommunikationseinrichtung 3 vorrätig gehaltene weitere Nachricht Ne in der Anzeigeeinheit 4 dargestellt werden.

## Patentansprüche

1. Verfahren zur Informationsübermittlung und -darstellung zu bzw. auf einer drahtlos betreibbaren Kommunikationseinrichtung (3) mit einer Anzeigeeinheit (4), bei dem
- mehrere jeweils für sich auf der Anzeigeeinheit (4) darstellbare Nachrichten (N1,N2,N3,...,Nn) als zusammenhängende Gesamtnachricht (2) zu der Kommunikationseinrichtung (3) übertragen werden und
- die Nachrichten (N1,N2,N3,...,Nn) jeweils für sich auf der Anzeigeeinheit (4) angezeigt werden,
**dadurch gekennzeichnet** , daß
- die Nachrichten (N1,N2,N3,...,Nn) jeweils mindestens ein Bild (B1,B2,B3,...,Bn) einer Bildfolge enthalten und die Nachrichten (N1,N2,N3,...,Nn) mit jeweils einem Bild (B1,B2,B3,...,Bn) der Bildfolge in einer derartigen zeitlichen Abfolge angezeigt werden, daß der Eindruck von sich bewegenden Bildern vermittelt wird.

2. Verfahren nach Anspruch 1,
**dadurch gekennzeichnet** , daß die zeitliche Abfolge der Nachrichten (N1,N2,N3,...,Nn) eingriffsabhängig unterbrochen wird.

3. Verfahren nach Anspruch 1 oder 2,
**dadurch gekennzeichnet**, daß zur Übertragung der jeweils mindestens ein Bild (B1,B2,B3,...,Bn) enthaltenden Nachrichten (N1,N2,N3,...,Nn) ein Wireless Application Protocol (WAP) genanntes Kommunikationsprotokoll verwendet wird.

4. Verfahren nach einem der vorhergehenden Ansprüche,
**dadurch gekennzeichnet**, daß eine Wireless Markup Language (WML) genannte Seitenbeschreibungssprache benutzt wird.

5. Verfahren nach Anspruch 4,
**dadurch gekennzeichnet**, daß als Gesamtnachricht (2) ein Objekt des Typs "Deck" der Seitenbeschreibungssprache WML übertragen wird.

6. Verfahren nach Anspruch 4 oder 5,
**dadurch gekennzeichnet**, daß die Nachrichten (N1,N2,N3,...,Nn) als Objekte des Typs "Card" der Seitenbeschreibungssprache WML übertragen werden.
